# EUROPÄISCHE PATENTSCHRIFT

(11) **EP 1 595 438 B1**
(45) Veröffentlichungstag und Bekanntmachung des Hinweises auf die Patenterteilung: **31.12.2008**
(21) Anmeldenummer: 05009887.0
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested agricultural crop
Dispositif pour ramasser et compacter des matières récoltées

(30) Priorität: 11.05.2004 DE 102004023696
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); Martensen, Klaus Dr.-Ing., 48477 Hörstel (DE)

(56) Entgegenhaltungen:
- WO-A-97/03550
- FR-A- 2 647 630
- US-A- 3 901 007
- US-A- 4 121 513

## Beschreibung

Die Erfindung bezieht sich auf eine Maschine zum Aufnehmen und Pressen von landwirtschaftlichem Erntegut wie beispielsweise Gras, Heu, Stroh oder dergleichen zu rollenförmigen Ballen mit einer mittels eines Fahrgestells aufklappbaren Wickelkammer in eine Ausbildung gemäß dem Oberbegriff des Patentanspruches 1.

Maschinen zum Aufnehmen und Pressen von landwirtschaftlichem Erntegut der vorgenannten Art sind in einer üblichen Bauform als Rundballenpressen mit Festkammerausbildung gestaltet und haben eine Ballenformeinrichtung, die während der gesamten Ballenformphase eine räumlich bestimmte Bewegungsbahn durchläuft und dazu in gehäuseseitigen Führungen geführt ist. Mit solchen Maschinen lassen sich Ballen eines bestimmten Ballendurchmessers formen, indem über eine Emtegutaufnahmevorrichtung dem Ballenformraum Erntegut zugeführt wird und nach Befüllung des vorgesehenen Ballenformraumes die Ballenformeinrichtung auf den zu formenden Ballen eine Verdichtungskraft von außen nach innen ausübt, so dass sich diese Verdichtungsphase an die vorangegangene Erntegutzuführungsphase bzw. die Ballenformphase anschließt. Mit solchen Maschinen lassen sich Ballen formen, die aufgrund der zum Ende der Ballenformung hin vorgesehenen Ballenverdichtungsphase einen relativ harten äußeren Durchmesserbereich bei gleichzeitigem relativ weichem Balleninneren aufweisen. Dies kann Vorteile bei einer nachfolgenden Verarbeitung des Ballens mit sich bringen, indem das relativ weiche Balleninnere mit einfachen Mitteln und auch ohne größeren Kraftaufwand zerteilt werden kann.

Darüber hinaus ist es, z.B. aus der EP 0 121 279 A2 bekannt, Maschinen zum Aufnehmen und Pressen von landwirtschaftlichem Erntegut als Pressen mit einer variablen Größe des Wickelkammerraums zu gestalten, mit denen ausgehend von einer Ballenformstartphase durch eine räumlich variabel bewegte Ballenformeinrichtung der zu formende Ballen ständig an der Ballenformeinrichtung geführt wird, diese mithin auch während der gesamten Befüllung des variablen Wickelraumes auf den Ballen eine Kraft ausübt und eine abschließende Verdichtungsphase dadurch entfällt. Da die Verdichtung des Ballens kontinuierlich durchgeführt wird, sind Ballen mit einem gewünschten Durchmesserendbereich des Ballens fertig aus dem Ballenformraum auszubringen, so dass Ballen mit unterschiedlicher Größe zur Verfügung gestellt werden können. Ein solcher in einer Maschine mit variablem Wickelraum gefertigter Ballen unterscheidet sich jedoch hinsichtlich seines Aufbaus, beispielsweise hinsichtlich seiner Festigkeit des Balleninneren von einem Ballen, der in einer Maschine gefertigt wird, die nach dem Festkammerprinzip arbeitet. So ist ein solcher in einer Maschine mit variablem Wickelraum hergestellter Ballen gegenüber einem in einer Festkammermaschine hergestellten Ballen hinsichtlich seiner Auflöseigenschaften unterschiedlich. Nachteilig bei Maschinen, die nach dem variablen Ballenformprinzip arbeiten, ist zudem der hohe technische Aufwand in Gestalt von vorzusehenden konstruktiven Mitteln, die eine Variabilität der Ballengröße und eine permanente Krafteinwirkung ermöglichen. Zudem sind mit solchen Maschinen keine Ballen zu formen, die ein relativ weiches Balleninnere aufweisen.

Aus der US 3,901,007 ist eine Ballenpresse bekannt, bei der ein Erntegutballen in einer Wickelkammer durch Anlage an zwei sich bewegenden Teilen einer Ballenformeinrichtung gebildet wird. Einer dieser beiden Wickelbodenabschnitte, der durch einen endlos umlaufenden Wickelbodenteil gebildet wird, ist nachgiebig gestaltet. Da bei wachsendem Erntegutballen die Anlagefläche des Wickelbodens an dem Erntegutballen vergrößert wird, ist es notwendig, den zusätzlich benötigten Wickelboden aus einem Wickelbodenspeicher nachzuliefern. Dieser besteht aus schwenkbaren Umlenkeinrichtungen, die gegen eine, letztendlich eine Presskraft auf den Erntegutballen ausübende Spannkraft verschwenkt werden und damit Wickelboden freigeben. Nach der Formung eines Ballenkerns wird ständig eine Spannkraft bereitgestellt, die es erlaubt, jederzeit den weiteren Ballenformvorgang zu beenden und Ballen mit einer beliebigen Ballengröße (Durchmesser) auszuwerfen. Die beschriebene Ballenformeinrichtung der US 3,901,007 ist konstruktiv aufwendig und somit nur zeit- und kostenintensiv zu bauen.

Durch die WO 97/03550 A1 ist eine Rundballenpresse mit veränderlichem Pressraum bekannt geworden, bei der sich der Pressraum ausgehend von einem kleinen Ballenkernbildungsraum bis hin zu seiner maximalen Größe ausdehnen kann. Während der Ballenbildung ist es zur Vergrößerung des veränderlichen Pressraumes erforderlich, dass weitere Riemenlänge aus einer Speichereinrichtung zur Umgrenzung des entstehenden Rundballens frei zu geben ist. Dazu sind in der WO 97/03550 A1 ein primärer und ein sekundärer Riemenspanner vorgesehen, die die Riemen in unterschiedlichen Kombinationsmöglichkeiten mit einer Presskraft beaufschlagen. Dabei ist es z. B. vorgesehen, einen Rundballen mit einem weicheren Kern herzustellen. Weiterhin sind verschiedenartige Kompressionsprogramme offenbart, die beispielsweise eine konstante Presskraft oder eine allmählich ansteigende Presskraft auf die den Pressraum umgebenden Riemen ausüben. Ebenso gibt die WO 97/03550 A1 Aufschluss darüber, dass durch eine veränderliche Gestaltung der Größe des Ballenkernbildungsraumes der weiche Kern eines Rundballens unterschiedliche Durchmesser aufweisen kann und somit eine verbesserte Eignung zur Verdichtung unterschiedlichster Erntegüter gegeben ist. Nach dem Ballenkernbildungsprozess unterliegt aber auch die hier beschriebene Rundballenpresse der Funktionsweise, bei der die auf den zu formenden Rundballen einwirkende Presskraft so eingestellt bzw. vorgegeben ist, dass jederzeit die weitere Ballenbildung beendet und ein fertiger Rundballen ausgeworfen werden kann. Die Herstellung auch solcher Rundballenpressen erfordert einen hohen konstruktiven Aufwand, der verständlicherweise auch mit hohen Kosten verbunden ist.

Es ist Aufgabe der vorliegenden Erfindung, eine Maschine der eingangs genannten Art zur Verfügung zu stellen, die in baulich einfacher Weise mit Ballenformeinrichtungen auskommt, die jedoch darüber hinaus in der Lage ist, Ballen unterschiedlicher Größe zu formen.

Zur Lösung dieser Aufgabe zeichnet sich die Maschine zum Aufnehmen und Pressen von landwirtschaftlichem Erntegut der eingangs genannten Art dadurch aus, dass die Ballenformeinrichtung aus der räumlich bestimmten Bewegungsbahn während einer ersten Ballenformphase in einer nachfolgenden Ballenformphase von den ortsfesten Führungen durch den zu formenden Ballen wegbewegbar ist und in von den ortsfesten Führungen unabhängige, durch die wachsende Größe des zu formenden Ballens bestimmte Bewegungsbahnen bis hin zu einem vorgewählten maximalen Ballendurchmesser überführbar ist, wobei der vorgewählte maximale Ballendurchmesser durch bewegliche Stellmittel, welche als eine einstellbare Begrenzungsvorrichtung zur Begrenzung der wirksamen Länge der Ballenformeinrichtung ausgebildet sind, bestimmt ist und nach Erreichen des eingestellten maximalen Ballendurchmessers die Verdichtung des zu formenden Ballens von außen nach innen als Ballenverdichtungsphase einleitbar ist, wobei der jeweils kleinere Durchmesserbereich auch dadurch zu erreichen ist, dass sich die weitere Ballenformphase mit den weiteren Bewegungsbahnen der Ballenformeinrichtung gar nicht mehr einstellt, sondern die Stellmittel aufgrund ihrer gewählten Stellung dafür sorgen, dass sich unmittelbar nach Beendigung der ersten Ballenformphase bereits die Verdichtungsphase anschließt.

Damit ist eine Maschine zum Aufnehmen und Pressen von landwirtschaftlichem Erntegut zur Verfügung gestellt, bei der zunächst der Ballen wie bei einer bekannten Festkammermaschine behandelt wird, indem über eine Erntegutaufnahmevorrichtung das Erntegut in den Ballenformraum relativ lose eingebracht wird, ohne dass auf das Erntegut bereits eine für eine Verdichtung wesentliche Kraft durch die Ballenformeinrichtung ausgeübt wird. Während dieser Phase durchläuft die Ballenformeinrichtung in völlig analoger Weise wie bei einer Festkammermaschine eine räumlich bestimmte Bewegungsbahn, die konstruktiv durch die Maschine vorgegeben ist. Dabei tritt ein Polygoneffekt bezüglich der Vorverdichtung des Erntegutes auf, in dem während dieser ersten Ballenformphase das Erntegut pulsierend vorverdichtet werden kann. Dies kann durch eine mehreckig gestaltete Ballenformeinrichtung begünstigt werden. Erst nach Erreichen einer Ballengröße, bei der der Ballen mit der Ballenformeinrichtung in Kontakt gerät, kann sich eine weitere Ballenformphase anschließen, bei der die Ballenformeinrichtung ständig an dem zu formende Ballen anliegt, wobei die Ballenformeinrichtung während dieser sich an die erste Ballenformphase anschließenden Ballenformphase sich ändernde, durch die wachsende Größe des Ballens bestimmte Bewegungsbahnen durchläuft, und zwar bis hin zu einem von der Bedienperson vorgewählten, durch Stellmittel bestimmten Bereich, der damit auch den maximalen Ballendurchmesser des zu formenden Ballens wählbar bestimmt. Ist dieser maximale Ballendurchmesserbereich erreicht, schließt sich wiederum wie bei bekannten Festkammermaschinen die Verdichtung des äußeren Ballendurchmesserbereiches an, indem nämlich die Ballenverdichtungsphase eingeleitet wird und mithin ein Ballen zu formen ist, der bei variabler Ballendurchmessergröße einen relativ weichen Ballenkern und eine relativ stark verdichtete Außenhaut aufweist. Dies alles ist mit baulich relativ einfachen Mitteln zu vollziehen, womit eine Maschine zur Verfügung gestellt ist, die von ihrem gattungsgemäßen Funktionsprinzip eine Festkammermaschine darstellt, jedoch nicht auf eine Ballengröße beschränkt ist. So können mit einer derartigen Maschine beispielsweise Ballen geformt werden mit Größen von beispielsweise 100 bis 125 oder 125 bis 150 oder 100 bis 150 cm Durchmesser, wobei der jeweils kleinere Durchmesserbereich auch dadurch zu erreichen ist, dass sich die weitere Ballenformphase mit den weiteren Bewegungsbahnen der Ballenformeinrichtung gar nicht mehr einstellt, sondern die Stellmittel aufgrund ihrer gewählten Stellung dafür sorgen, dass sich unmittelbar nach Beendigung der ersten Ballenformphase bereits die Verdichtungsphase anschließt. Der Benutzer einer Maschine kann daher die erfindungsgemäße Maschine auch als reine Festkammermaschine nutzen ohne den Ballenformraum variabel ab einem bestimmten Durchmesser zu vergrößern. Darüber hinaus kann er jedoch mit einfachen und bedienerfreundlichen Mitteln auch im Bedarfsfall größere Ballen formen, wobei sich bei diesem gewählten Ballenformvorgang die weitere Ballenformphase an die erste Ballenformphase vor der Verdichtungsphase anschließt.

Bevorzugterweise sind die Stellmittel als Anschläge, Begrenzungselemente und dgl. vorgesehen, wobei ein Begrenzungselement bzw. ein Widerlager gehäusefest abgestützt sein kann und ein anderes Anschlagelement z.B. verstellbar ausgebildet ist, um den wählbaren Durchmesserbereich realisieren zu können. Alternativ bieten sich selbstverständlich auch pneumatische oder hydraulische Stellmittel mit entsprechenden blockierten Stellungslagen an, um die entsprechenden Anschläge bzw. Widerlager mit einfach anfahrbarer Endstellung auszubilden. In einer besonders bevorzugten Ausbildung der Maschine nach der Erfindung können mehrere ortsfeste Umlenkeinrichtungen vorgesehen sein. Der Ballenformraum ist zunächst durch Seitenwandgehäuseteile zu begrenzen. Ab einer bestimmten Höhe kann dieser erweitert ausgebildet sein und mithin einen Absatz aufweisen, der sich zu den Außenseiten der Maschine hin erweitert. In diesem Bereich können weitere Führungsrollen ortsfest abgestützt werden, auf denen zur Festlegung der bestimmten Bewegungsbahn innerhalb der Maschine die Ballenformeinrichtung abläuft. Durch die Erweiterung ist oberhalb dieser Führungen ein Ausweichraum für die Ballenformeinrichtung vorgesehen, so dass diese nach dorthin ausweichen kann, wenn die weiteren Bewegungsbahnen der Formeinrichtung eingenommen werden sollen nach Erreichen bzw. Beendigung der ersten Ballenformphase. Durch die vorgesehenen Umlenkrollen und durch vorzugsweise vorgesehenen Riemen, die Bestandteile der Ballenformeinrichtung sind, sind die Laufgeräusche der Formeinrichtung außerordentlich gegenüber herkömmlichen Maschinen reduziert.

Weitere Vorteile und Ausgestaltungen der Erfindung ergeben sich aus weiteren Unteransprüchen, der nachfolgenden Beschreibung und der Zeichnung. In der Zeichnung zeigen:
- Figur 1:: Eine schematisch geschnittene Seitenansicht einer Maschine mit Darstellung einer Lage der Ballenformeinrichtung während der ersten Ballenformphase;
- Figur 2:: eine zu Figur 1 analoge Darstellung mit Darstellung der Ballenformeinrichtung, die sich in ihrer Endlage in der Verdichtungsphase befindet;
- Figur 3:: eine schematische perspektivische Darstellung der Ballenformeinrichtung, die in dem gezeigten Ausführungsbeispiel Umlenkrollen und an einem Absatz an den Seitenwandungsteilen der Maschine geführt ist und seitliche Riemen sowie Stäbe aufweist;
- Figur 4:: eine Schnittdarstellung im Riemen- und Stabbereich in der Ballenformeinrichtung sowie durch eine ortsfeste Umlenkrolle in dem in Figur 3 gezeigten Gehäuseabsatz;
- Figuren 5 und 6:: schematische Schnittdarstellungen der Lagen der Ballenformeinrichtung in den Stellungen, die in Figuren 1 und 2 darstellt sind,
- Figur 7:: schematisch eine zusätzliche Ausführungsform mit einer von einer Sicherheitskupplung unabhängigen Hydraulikpumpe,
- Figur 8:: ein Stellmittel eines Speichers der Ballenformeinrichtung in einer Stellung bei einem kleinen Erntegutballen und
- Figur 9:: eine zu Fig. 8 analoge Darstellung bei einem großen Erntegutballen.

Die Zeichnungen zeigen in einigen Darstellungen jeweils nur eine Seite einer Maschine mit den dort vorgesehenen Teilen. Es versteht sich, dass diese auch an der anderen Maschinenseite, die nicht dargestellt ist, vorhanden sind bzw. vorhanden sein können.

Die Maschine 1 ist in dem gezeigten Ausführungsbeispiel als Rundballenpresse ausgebildet und hat eine Ballenformeinrichtung 2, die eine Wickelkammer 3 ausbildet. Diese Wickelkammer 3 hat eine Einlassöffnung 4, durch die von einer Erntegutaufnahmevorrichtung 6 aufgenommenes Emtegut, wie beispielsweise Heu oder Anwelkgut in die Wickelkammer 3 eingebracht wird. Eine Antriebsrolle 7 unterteilt die Ballenformeinrichtung 2 in ein Lastrum 8 und Leertrum 9. Beiderseits der Öffnung 4 angeordnete Walzen 11 begrenzen die Wickelkammer 3.

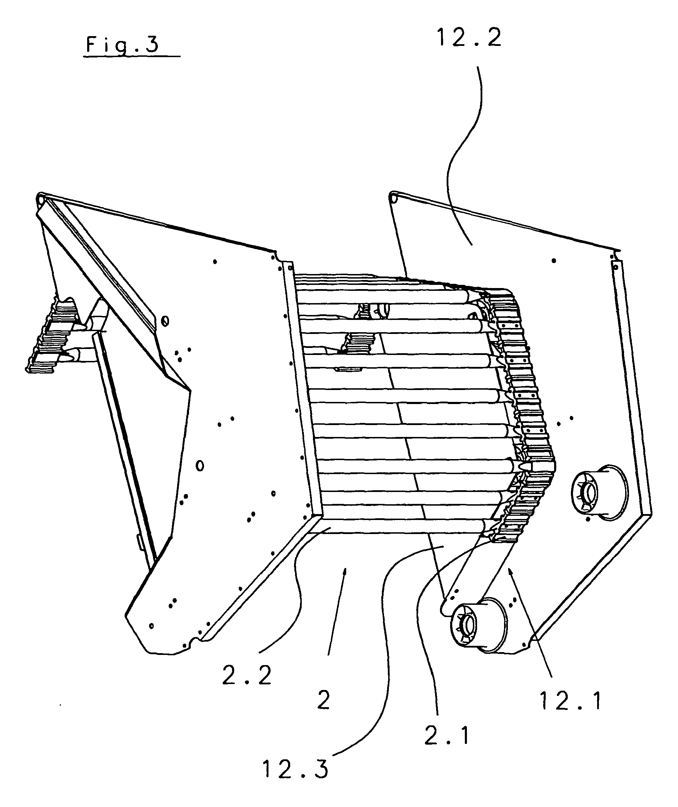

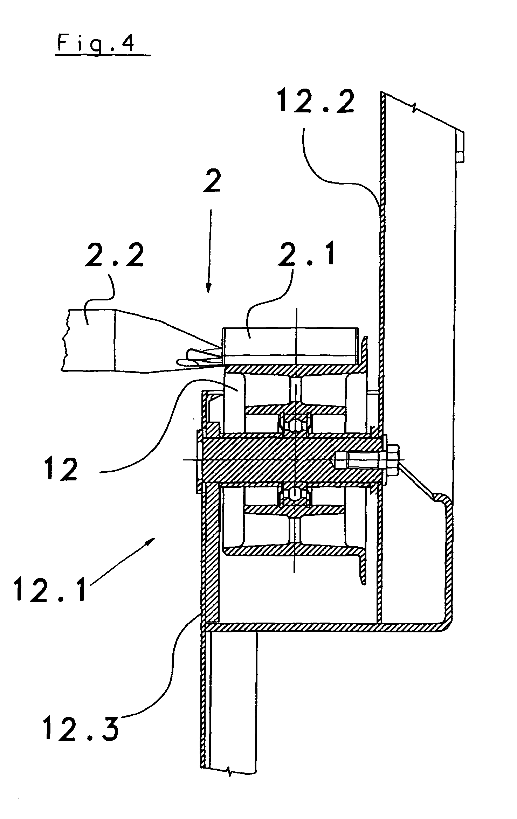

Zusätzlich ist eine erste ortsfeste Umlenkeinrichtung in Gestalt der Umlenkrollen 16 sowie einer Umlenkrolle 7 vorgesehen, wobei die Umlenkrollen 7 die Antriebsrolle für die Ballenformeinrichtung 2 sind. Zusätzlich sind in dem gezeigten Ausführungsbeispiel ortsfest abgestützt weitere Umlenkrollen 12 vorgesehen, die auf einem nach innen ausgestellten Absatz 12.1 der Seitenwandgehäuseteile 12.2 angeordnet sind (Figur 3 und 4).

In diesem Bereich erweitert sich mithin das Gehäuse, so dass oberhalb der Führungsrollen 12 und der Endbereiche der Stäbe 2.2 und des als Riemen ausgeführten Zugmittels 2.1 für die Ballenformeinrichtung 2 ein Leerraum vorgesehen ist, in den die Ballenformeinrichtung - in der Darstellung nach Figur 4 mithin nach oben - ausweichen kann.

Die Ballenformeinrichtung 2 hat des weiteren einen allgemein als Speicher 14 bezifferten Bereich, der über eine Umlenkrolle 18 an einem Spannarm 19 abgestützt ist. An diesem Spannarm 19 greift ein als Feder 13 ausgebildeter Kraftspeicher an. Mithin kann die Ballenformeinrichtung 2 in diesem Bereich ausweichen. Füllt sich die Wickelkammer 3, so wird ein nach außen gerichteter Druck auf den Lastrum 8 ausgeübt und die Feder 13 gestaucht. Dabei ändert sich die zwischen den Umlenkrollen 18,19,21 befindliche Länge der Ballenformeinrichtung 2. Die Erntegutballenvergrößerung geht einher mit einer Vergrößerung der Wickelkammer 3. Dadurch ist auch sichergestellt, dass in einer solchen Ballenformphase, die sich an die erste Ballenformphase mit räumlich bestimmter Bewegungsbahn der Ballenformeinrichtung anschließt, keine wesentliche Presskraft bzw. Verdichtungskraft von außen nach innen auf den zu formenden und sich vergrößernden Ballen vor der vorgesehenen Verdichtungsphase ausgeübt wird.

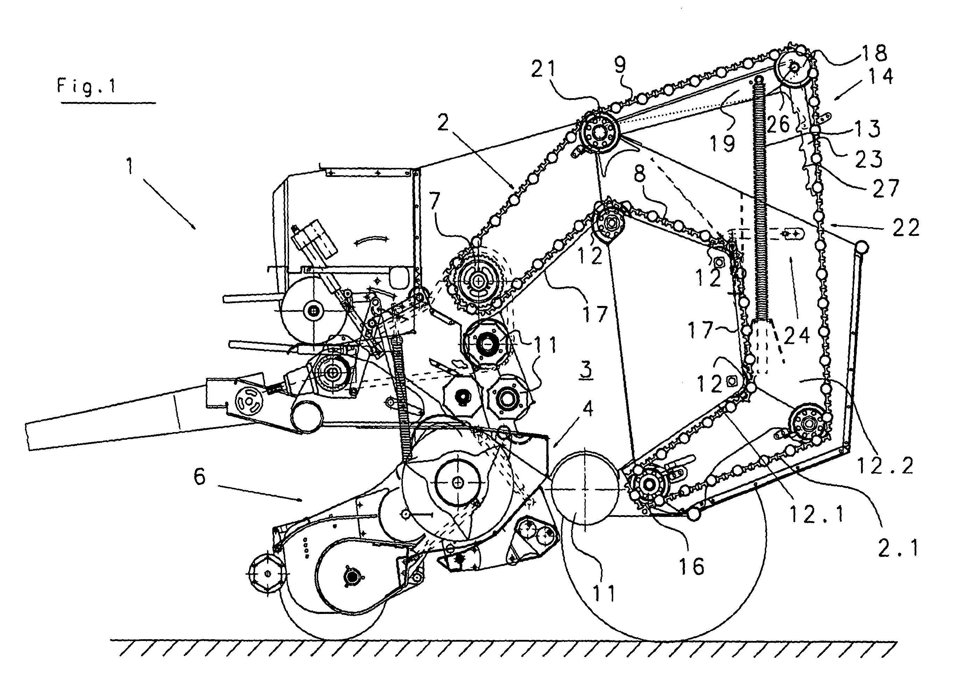

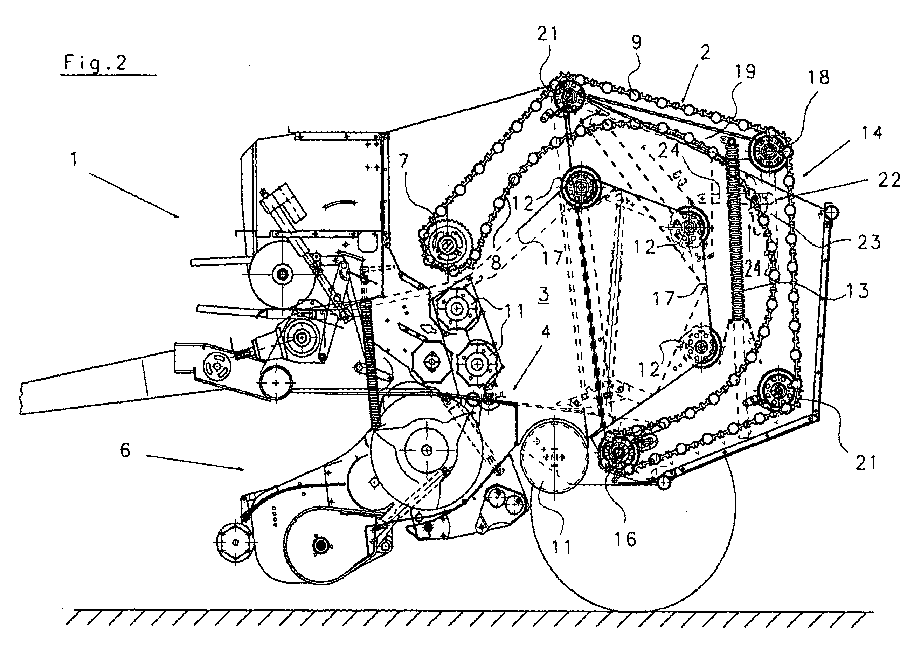

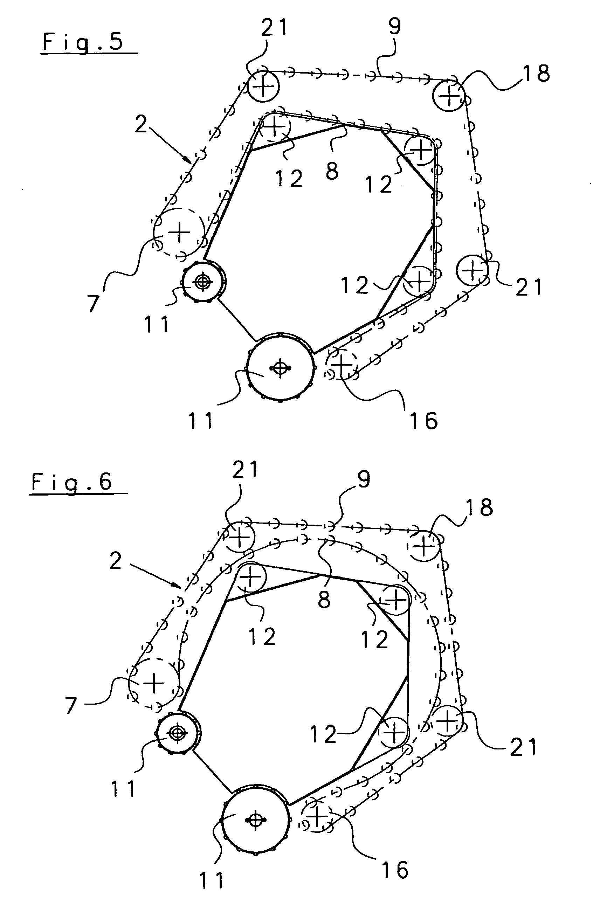

Im Betrieb wird über die Erntegutaufnahmevorrichtung 6 Erntegut in die Wickelkammer 3 durch die Einlassöffnung 4 eingebracht. Zu Beginn dieses Ballenformvorganges ist dabei eine Ballenstartkammer ausgebildet, die durch die Ballenformeinrichtung mehreckig begrenzt wird, wie dies auch näher aus Figur 5 der Zeichnungen hervorgeht. Dadurch ist der Ballenstartvorgang begünstigt. Während dieses Startvorganges und auch während einer definierten ersten Ballenformphase nimmt die Ballenformeinrichtung die in Figuren 1 und 5 dargestellten Lagen ein und beschreibt mithin die daraus ersichtliche gleichbleibende und mithin räumlich bestimmte Bewegungsbahn. Dabei ist sie über die erste und zweite Umlenkrolle 7 bzw. 16 und dem, dem zu formenden Ballen zugewandten Bereich über die ortsfesten an dem Absatz 12.1 der Seitenwandung 12.2 angeordneten ortsfesten Rollen 12 geführt. Füllt das eingebrachte Erntegut die Ballenstartkammer, kann sich die Ballenformeinrichtung 2 mit ihrem Lastrum 8 weiterhin ausdehnen, wobei über die Stauchung der Feder 13 und die Nachgiebigkeit des Spannarms 19 die Bewegungsbahn der Ballenformeinrichtung der sich jetzt erweiternden Größe in dieser nachfolgenden Ballenformphase anpasst, so dass während dieser nachfolgenden Ballenformphase in von den Führungsrollen 12 unabhängig, durch den Durchmesser des zu formenden Ballens bestimmte weitere Bewegungsbahnen bis hin zu einem einstellbaren Ballendurchmesser ergeben. Die mit in dem dargestellten Ausführungsbeispiel erreichbare äußerste Bewegungsbahn ist in der Figur 2 und in der Figur 6 veranschaulicht.

Der zu formende Ballen kann mithin einen Durchmesser haben, der zwischen den Lagen einstellbar variieren kann, die durch die Lagen des Lastrums 8 der Ballenformeinrichtung 2 - gezeigt in Fig. 1 - und die Lage des Lastrums 8 der Ballenformeinrichtung 2 - gezeigt in Figur 2 - beliebig variieren kann. Aufgrund der nachgiebigen Abstützung der Umlenkrolle 18 ist während der weiteren Ballenformphase ein guter Kontakt zwischen der Ballenformeinrichtung 2 der Antriebsrolle 7 vorhanden, um Schlupf zu vermeiden.

Eine einstellbare Begrenzungsvorrichtung zur Vorgabe eines Durchmessers des Erntegutballens ist in dem gezeigten Ausführungsbeispiel als relativ zum Spannarm 19 bewegbarer Anschlag 22 ausgebildet, der in ein gehäusefestes Widerlager 24 eingreift. Je nach Relativposition des Anschlags 22 zum Spannarm 19, d.h. je nach Winkel, der zwischen der Längsachse des Spannarms 19 und der Längsachse des Anschlags 22 eingestellt ist, greift eine der Aufnahmen des Anschlags 22 in das Widerlager 24 ein und begrenzt somit die wirksame Länge der Ballenformeinrichtung 2, die von dem Speicher 14 zur Vergrößerung der Wickelkammer 3 zur Verfügung gestellt wird. Auf diese Art und Weise ist eine sehr einfache Vorrichtung zur Vorgabe eines Durchmessers des Erntegutballens geschaffen. Zusätzlich kann auch noch eine Messvorrichtung angeordnet sein, um beispielsweise das Verdichtungsmaß des Ballens bzw. die aufgebrachte Presskraft zu kontrollieren.

Vorteilhafterweise ist die zum Speicher 14 gehörende Umlenkrolle 18 in Fahrtrichtung vor dem hinteren Ende der Maschine und hinter dem Zentrum des sich bildenden Erntegutballens angeordnet. Damit baut die Maschine kompakt. Die Kraftbeaufschlagung des Spannarms 19 durch den als Feder 13 ausgeführten Kraftspeicher ist somit etwa rechtwinklig zum Spannarm 19, was einen günstigen Hebelarm und mithin eine gute Übertragung der aufgebrachten Kräfte mit sich bringt. Weiterhin greift die Feder 13 in der Nähe der Umlenkrolle 18 an dem Spannarm 19 an, und damit in einem Bereich, in dem die von der Ballenformeinrichtung 2 auf den Spannarm 19 aufgebrachten Kräfte anliegen. Gleiches gilt auch für den Anschlag 22, der um die Drehachse 24 der Umlenkrolle 18 schwenkbar ist. Die von der Ballenformeinrichtung 2 auf die Umlenkrolle 18 übertragenen Kräfte werden über den Anschlag 22 und das Widerlager 24 sowie den Spannarm 19 direkt in das Gehäuse geleitet, was eine besonders feste Abstützung gewährleistet.

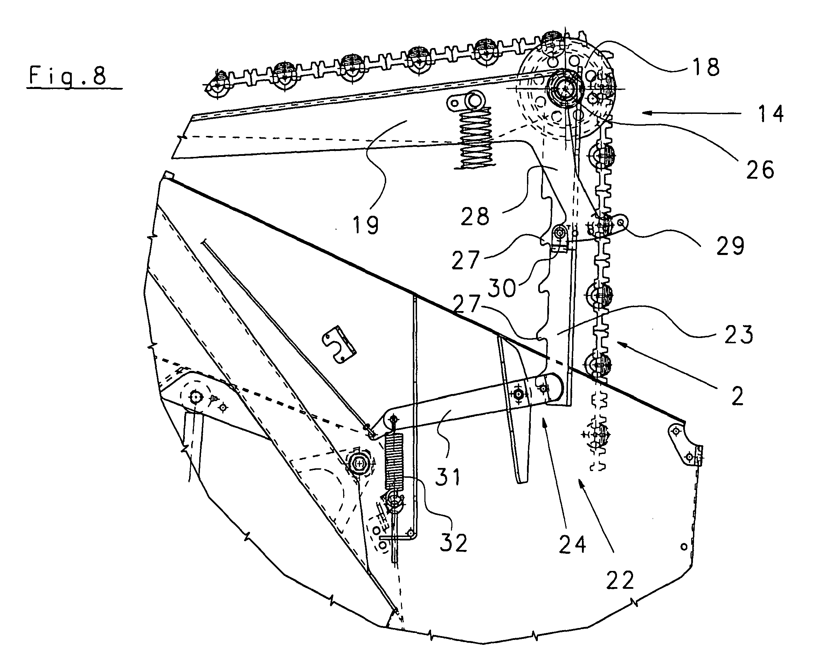

In Figur 8 ist das Stellmittel 22 des Speichers 14 deutlicher dargestellt. Um eine gute Überführung der auftretenden Kräfte auf das Gehäuses der Maschine 1 zu gewährleisten, ist das Begrenzungselement 23 auf beiden Seiten im Bereich der Umlenkrolle 18 des Spannarms 19 angeordnet. Dieses ist vorteilhaft, da die auf den Spannarm 19 einwirkenden Kräfte von der Ballenformeinrichtung 2 über die Umlenkrolle 18 geleitet werden. Gleichzeitig ist das Begrenzungselement 23 um eine Achse 26, die der Drehachse der Umlenkrolle 18 entspricht, verschwenkbar.

Bei den der unterschiedlichen Winkeln, die das Begrenzungselement 23 relativ zum Spannarm 19 einnehmen kann, gelangt das Begrenzungselement 23 in den unterschiedlichen, von den Nasen 27 ausgebildeten Bereichen in Anlage mit dem Widerlager 24. Entsprechend werden unterschiedliche Längen der Ballenformeinrichtung 2 freigegeben und es baut sich ein Pressdruck erst bei unterschiedlichen quasi maximalen Ballendurchmessern auf.

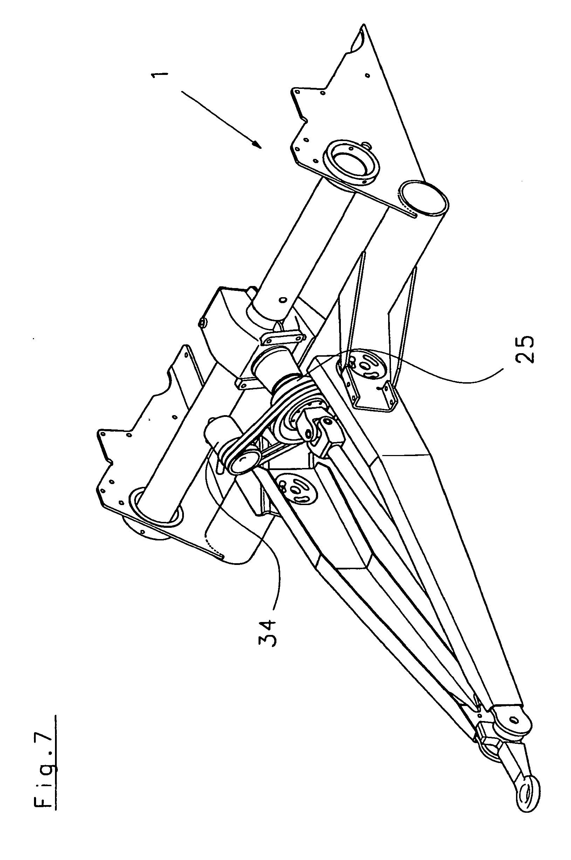

In Figur 7 ist eine Ausführungsform dargestellt, bei der es in einer alternativen Antriebslösung möglich ist, eine mit einer bordeigenen Hydraulikpumpe 34 versehene Maschine 1 zum Aufnehmen und Pressen von landwirtschaftlichem Erntegut im Falle einer Überlast im Antrieb betriebsbereit zu halten. Durch eine auf einem Außengehäuse einer Überlastsicherung 25 angebrachten und im Überlastfall weiterrotierenden Antriebsriemenscheibe wird die Hydraulikpumpe 34 auch im Überlastfall weiterhin mit mechanischer Antriebsenergie versorgt.

Das Stellmittel weist in dem in Figur 8 beschriebenen Aufführungsbeispiel zusätzlich einen Stellarm 28 mit Ausnehmungen 29 auf, die für eine Arretierung des Begrenzungselements 23 in den beschriebenen unterschiedlichen Winkelpositionen bezüglich des Spannarms 19 Sorge tragen. Hierfür greift eine Befestigung 30, die am Begrenzungselement 23 angebracht ist, lösbar in die Ausnehmungen 29 ein und arretiert somit das Begrenzungselement 23 in den verschiedenen Positionen.

Das Widerlager 24 weist weiterhin einen Hebelarm 31 auf, der zusammen mit einer am Gehäuse festgelegten Feder 32 die gehäusefeste Abstützung bildet. Durch die Feder 32 ist eine Beweglichkeit des Hebelarms 31 gewährleistet, so dass innerhalb eines vorgebbaren Bereiches mit Hilfe von mechanischen, elektromechanischen oder auch anderen Mitteln der auf den Emtegutballen wirkende Pressdruck ermittelt und zur Anzeige gebracht werden kann. Dieses dient beispielsweise einer gleichmäßigen Ausbildung des Erntegutballens, da die erfindungsgemäße Maschine 1 auf in Fahrtrichtung beiden Seiten des Erntegutballens die beschriebenen Stellmittel mit gehäusefesten Abstützungen aufweist und somit eine Anzeige für den auf den verschiedenen Seiten lastenden Pressdruck ermöglicht.

Somit ist in dem hier dargestellten Ausführungsbeispiel mit Hilfe einer auf Zugkraft basierenden Übermittlungsvorrichtung 33 eine Anzeige des Pressdrucks für den Betreiber der erfindungsgemäßen Maschine 1 möglich.

Eine Veränderung der Länge der die Wickelkammer 3 umgrenzenden Ballenformeinrichtung 2, die aufgrund der Feder 32 auch bei Erreichen der Anschlagsstellung eintritt, ist bei der Größe des sich bildenden Erntegutballens vernachlässigbar, so das bereits bei Erreichen der In-EingriffStellung unmittelbar vor Erreichen des maximalen Durchmessers aufgrund der praktisch nicht wahrnehmbaren weiteren Durchmesseränderung von dem Erreichen des maximalen Emtegutballendurchmessers gesprochen werden kann.

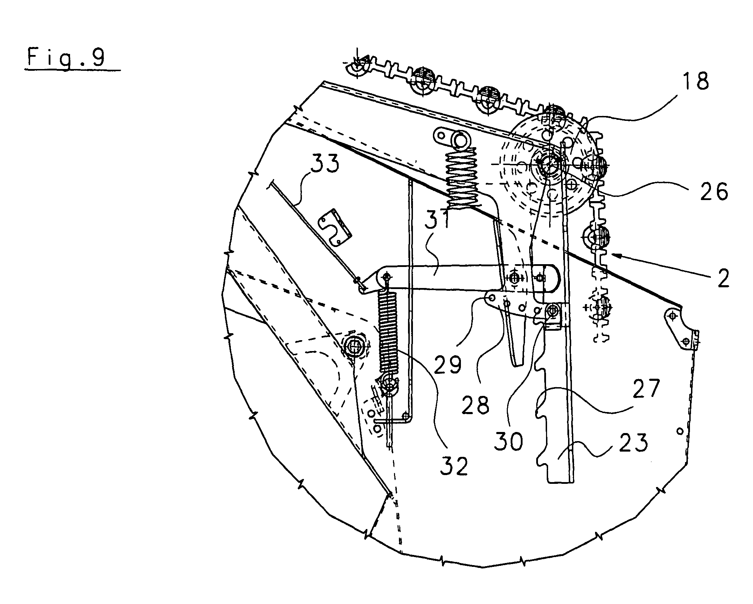

In der in Figur 9 abgebildeten Darstellung des Stellmittels ist eine Maximalposition des Begrenzungselements 23 gezeigt, in dem das Widerlager 24 in Eingriff mit der obersten, durch die Nase 27 gebildeten Ausnehmung steht. Dieses entspricht bei dem hier dargestellten Ausführungsbeispiel einem maximalen Erntegutballendurchmesser, wie er in Figur 2 durch den großen Umfang der Ballenformeinrichtung 2 in der Wickelkammer 3 angedeutet ist.

In der Perspektivdarstellung in Figur 5 ist gezeigt, dass der Hebelarm 31 in einer Kulisse 33 geführt ist, die ein zusätzliches Sicherungselement für ein mögliches Versagen der Feder 32 bildet. Zusätzlich zu der Angabe des Pressdruckes als Ballenkenngröße ist es auch denkbar, dass beispielsweise der Durchmesser des gerollten Erntegutballens mit angegebenen wird.

Trotz der unterschiedenen Ballendurchmesser befindet sich das Begrenzungselement 23 vorwiegend in einem Winkelbereich um 90° zum Spannarm 19. Hierdurch wird zwischen dem Anlagepunkt des Begrenzungselements 23 am Widerlager 24, der Umlenkrolle 18 und der Drehachse des Spannarms 19 (Figur 1) ein Stützdreieck ausgebildet, welches die auf die Umlenkrolle 18 von der Ballenformeinrichtung 2 ausgeübte Kraft in einer Lotrechten zum Widerlager 24 transportiert und somit optimale Stützsicherheit gewährleistet. Das Begrenzungselement muss daher lediglich in der vertikal zum Untergrund ausgerichteten Richtung besonders tragfähig sein.

Wie in Figur 5 ebenfalls erkennbar ist, umfasst die Ballenformeinrichtung 2 Querstäbe 2.2, deren Enden mehrfach gefaltete Hohlprofile aufweisen und über nicht näher dargestellten Nieten mit Tragriemen 2.1 verbunden sind. Bevorzugterweise sind die Tragriemen 2.1 aus einem geschmeidigen und doch wenig längenveränderlichen Material, um eine gute Anlage an der Umlenkrolle 18 zu gewährleisten und somit eine optimale Übertragung der abzustützenden Kräfte zu gewährleisten.

## Patentansprüche

1. Maschine (1) zum Aufnehmen und Pressen von landwirtschaftlichem Erntegut wie beispielsweise Heu, Stroh, Gras oder dergleichen zu rollenförmigen Ballen mit einer aufklappbaren Wickelkammer (3), welche eine einer Emtegutaufnahmevorrichtung (6) nachgeordnete Ballenformeinrichtung (2) aufweist, welche über zumindest eine erste und eine zweite ortsfeste Umlenkeinrichtung (7, 16) geführt ist und die während einer Ballenformphase innerhalb der Wickelkammer (3) eine räumlich bestimmte Bewegungsbahn auf ortsfesten Führungen (12) durchläuft und die zur Verdichtung des zu formenden Ballens nach Erreichen seines Maximaldurchmessers auf den Ballen eine Verdichtungskraft von außen nach innen ausübt, **dadurch gekennzeichnet, dass** die Ballenformeinrichtung (2) aus der räumlich bestimmten Bewegungsbahn während einer ersten Ballenformphase in einer nachfolgenden Ballenformphase von den ortsfesten Führungen (12) durch den zu formenden Ballen wegbewegbar ist und in von den ortsfesten Führungen (12) unabhängige, durch die wachsende Größe des zu formenden Ballens bestimmte Bewegungsbahnen bis hin zu einem vorgewählten maximalen Ballendurchmesser überführbar ist, wobei der vorgewählte maximale Ballendurchmesser durch bewegliche Stellmittel (22, 26, 23), welche als eine einstellbare Begrenzungsvorrichtung zur Begrenzung der wirksamen Länge der Ballenformeinrichtung (2) ausgebildet sind, bestimmt ist und nach Erreichen des eingestellten maximalen Ballendurchmessers die Verdichtung des zu formenden Ballens von außen nach innen als Ballenverdichtungsphase einleitbar ist, wobei der jeweils kleinere Durchmesserbereich auch **dadurch** zu erreichen ist, dass sich die weitere Ballenformphase mit den weiteren Bewegungsbahnen der Ballenformeinrichtung gar nicht mehr einstellt, sondern die Stellmittel (22, 26, 23) aufgrund ihrer gewählten Stellung dafür sorgen, dass sich unmittelbar nach Beendigung der ersten Ballenformphase bereits die Verdichtungsphase anschließt.

2. Maschine nach Anspruch 1, **dadurch gekennzeichnet, dass** die Stellmittel zur einstellbaren Begrenzung des maximalen Ballendurchmessers als mit zumindest einem Begrenzungselement (23) zusammenwirkende Anschläge (22, 26) ausgebildet sind.

3. Maschine nach Anspruch 2, **dadurch gekennzeichnet, dass** das Begrenzungselement (23) an dem Maschinengehäuse angeordnet ist.

4. Maschine nach einem der Ansprüche 2 oder 3, **dadurch gekennzeichnet, dass** die Stellmittel (22, 26) schwenkbar ausgebildet sind.

5. Maschine nach einem der Ansprüche 1 bis 4, **dadurch gekennzeichnet, dass** die zwischen der ersten und der zweiten Umlenkeinrichtung (7, 16) vorgesehenen Führungen ortfeste Seitenwandführungen (12.1) eines Gehäuses der Machine umfassen.

6. Maschine nach einem der Ansprüche 1 bis 5, **dadurch gekennzeichnet, dass** die Wickelkammer (3) durch Gehäusewandungsteile (12.2) begrenzt ist, die die Seitenwandführungen (12.1) aufweisen.

7. Maschine nach Anspruch 5 oder 6, **dadurch gekennzeichnet, dass** die seitlichen Gehäusewandungsteile (12.2) des Wickelraumes (3) mit einem nach innen ausgestellten Absatz als ortsfeste Seitenwandführungen (12.1) für die räumlich bestimmte Bewegungsbahn der Ballenformeinrichtung (2) ausgebildet sind.

8. Maschine nach einem der Ansprüche 5 bis 7, **dadurch gekennzeichnet, dass** die ortsfesten Seitenwandführungen (12.1) ortsfest abgestützte Umlenkrollen (12) aufweisen.

9. Maschine nach einem der Ansprüche 1 bis 8, **dadurch gekennzeichnet, dass** die Ballenformeinrichtung (2) endseitig an Zugmitteln (2.1) festgelegte Querstäbe (2.2) aufweist.

10. Maschine nach einem der Ansprüche 1 bis 9, **dadurch gekennzeichnet, dass** die erste und die zweite Umlenkeinrichtung (7, 16) als in dem Ballenformraum (3) angeordnete obere und untere ortsfeste Umlenkrollen ausgebildet sind, und die untere ortsfeste Umlenkrolle (16) unmittelbar einem Förderelement (11) der Erntegutaufnahmevorrichtung (6) nachgeordnet ist.

11. Maschine nach Anspruch 10, **dadurch gekennzeichnet, dass** das Förderelement (11) der unteren Umlenkrolle (16) derart vorgeordnet ist, dass das geförderte Erntegut von oben der durch die untere Umlenkrolle (16) umgelenkten Ballenformeinrichtung (2) zugeführt wird.

12. Maschine nach einem der Ansprüche 1 bis 11, **dadurch gekennzeichnet, dass** die Ballenformeinrichtung (2) während einer ersten Ballenformphase derart an den Führungen (12) und den ortsfesten Seitenwandführungen (12.1) geführt ist, dass eine mehreckige, aber einer kreisrunden Form angenäherte Ballenstartkammer ausgebildet ist.

13. Maschine nach Anspruch 12, **dadurch gekennzeichnet, dass** die Ballenstartkammer dreieckförmig, viereckförmig oder fünfeckförmig ausgebildet ist.

14. Maschine nach einem der Ansprüche 1 bis 13, **dadurch gekennzeichnet, dass** die Führungen (12) außerhalb der den Wickelraum (3) während der ersten Ballenformphase seitlich begrenzenden Gehäusewandung (12.3) angeordnet sind.

15. Maschine nach einem der Ansprüche 1 bis 14, **dadurch gekennzeichnet, dass** sich die Querstäbe (2.2) der Ballenformeinrichtung (2) über die Breite des Ballenformraumes während der ersten Ballenformphase hinaus erstrecken.

16. Maschine nach einem der Ansprüche 1 bis 15, **dadurch gekennzeichnet, dass** mit Einleitung der Ballenverdichtungsphase Messelemente zur Bestimmung einer Ballenkennung wie z.B. Ballenfestigkeit oder dgl. aktivierbar sind.

17. Maschine nach einem der Ansprüche 1 bis 16, **dadurch gekennzeichnet, dass** eine von einer Überlastsicherung (25) unabhängige Hydraulikpumpe (34) vorgesehen ist, die im Überlastfall für den Betrieb eines Maschinenaggregates ausgebildet ist.

18. Maschine nach einem der Ansprüche 1 bis 16, **dadurch gekennzeichnet, dass** die Ballenformeinrichtung (2) über Umlenkrollen (18), die von Kraftspeichern belastbar sind, nachgiebig abstützbar ist.

19. Maschine nach Anspruch 18, **dadurch gekennzeichnet, dass** die Kraftspeicher als Federn (13) ausgebildet sind.

## Claims

1. Machine (1) for picking up and pressing harvested agricultural crop, such for example as hay, straw, grass or the like, into bales in roll form, having a winding chamber (3) able to be folded open which has a bale-forming means (2) positioned downstream of a device (6) for picking up the harvested crop, which bale-forming means (2) is guided over at least one first and one second direction-changing means (7, 16) located in fixed positions and, during a bale-forming phase, travels within the winding chamber (3), on guides located in fixed positions (12), along a path of movement which is defined in space and, to compress the bale which is being formed once it has reached its maximum diameter, exerts a compressing force on the bale from the outside inwards, **characterised in that**, in a succeeding bale-forming phase, the bale-forming means (2) can be moved off the path of movement which is defined in space during the first bale-forming phase and away from the guides (12) located in fixed positions by the bale which is being formed and can be transferred to paths of movement which are independent of the guides (12) located in fixed positions and which are determined by the increasing size of the bale which is being formed, up to the point where a preselected maximum bale diameter is reached, the preselected maximum bale diameter being determined by movable adjusting means (22, 26, 23) which take the form of a settable limiting arrangement for limiting the effective length of the bale-forming means (2), and, once the maximum bale diameter which has been set is reached, the compression from the outside inwards of the bale which is being formed being able to be initiated as a bale compressing phase, it also being possible for whatever is the smaller range of diameters in the given case to be obtained by virtue of the fact that the further bale-forming phase in which the bale-forming means follows the further paths of movement no longer comes into operation in any way and the compressing phase follows on immediately on completion of the first bale-forming phase.

2. Machine according to claim 1, **characterised in that** the adjusting means for the settable limiting of the maximum bale diameter are in form of stops (22, 26) which co-operate with at least one limiting member (23).

3. Machine according to claim 2, **characterised in that** the limiting member (23) is arranged on the casing of the machine.

4. Machine according to either of claims 2 and 3, **characterised in that** the adjusting means (22, 26) are formed to be pivotable.

5. Machine according to one of claims 1 to 4, **characterised in that** the guides which are provided between the first and second direction-changing means (7, 16) comprise side-wall guides (12.1) located in fixed positions belonging to a casing of the machine.

6. Machine according to one of claims 1 to 5, **characterised in that** the winding chamber (3) is bounded by wall parts (12.2) of the casing which have the side-wall guides (12.1).

7. Machine according to claim 5 or 6, **characterised in that** the lateral wall parts (12.2) of the casing which belong to the winding chamber (3) are formed to have inwardly projecting ledges which act as side-wall guides (12.1) located in fixed positions for the path of movement which is defined in space of the bale-forming means (2).

8. Machine according to one of claims 5 to 7, **characterised in that** the side-wall guides (12.1) located in fixed positions have direction-changing rollers (12) which are supported in fixed positions.

9. Machine according to one of claims 1 to 8, **characterised in that** the bale-forming means (2) has transverse bars (2.2) which are fixed at the ends to tractive means (2.1).

10. Machine according to one of claims 1 to 9, **characterised in that** the first and second direction-changing means (7, 16) are in the form of top and bottom direction-changing rollers located in fixed positions which are arranged in the bale-forming chamber (3), and the bottom direction-changing roller (16) located in a fixed position is arranged immediately upstream of a feeding element (11) of the device (6) for picking up the harvested crop.

11. Machine according to claim 10, **characterised in that** the feeding element (11) is arranged upstream of the bottom direction-changing roller (16) in such way that the harvested crop which is fed is fed from above to the bale forming means (2) whose direction is changed by the bottom direction-changing roller (16).

12. Machine according to one of claims 1 to 11, **characterised in that**, during a first bale-forming phase, the bale-forming means (2) is guided on the guides (12) and on the side-wall guides (12.1) located in fixed positions in such a way that a bale-starting chamber which is polygonal but approximates to a circular shape is formed.

13. Machine according to claim 12, **characterised in that** the bale-starting chamber is of a triangular, quadrangular or pentagonal form.

14. Machine according to one of claims 1 to 13, **characterised in that** the guides (12) are arranged off that wall (12.3) of the casing which bounds the winding chamber (3) laterally during the first bale-forming phase.

15. Machine according to one of claims 1 to 14, **characterised in that** the transverse bars (2.2) of the bale-forming means (2) extend across the width of the bale-forming chamber during the first bale-forming phase.

16. Machine according to one of claims 1 to 15, **characterised in that** measuring members to determine a bale characteristic such for example as bale firmness or the like can be brought into action on the initiation of the bale compressing phase.

17. Machine according to one of claims 1 to 16, **characterised in that** a hydraulic pump (34) is provided which is independent of an anti-overload safety device (25) and which is designed to operate a sub-assembly of the machine in the event of an overload.

18. Machine according to one of claims 1 to 16, **characterised in that** the bale-forming means (2) can be supported in a yielding manner by means of direction-changing rollers (18) to which a load can be applied by force-storing means.

19. Machine according to claim 18, **characterised in that** the force-storing means take the form of springs (13).

## Revendications

1. Machine (1) pour ramasser et presser des produits agricoles de récolte tels que par exemple du foin, de la paille, de l'herbe ou des produits analogues pour former des balles rondes à l'aide d'une chambre d'enroulement (3) qui s'ouvre par relevage, comportant une installation de formation de balles (2) en aval d'un dispositif de ramassage de produits (6), cette installation étant guidée sur au moins une première et une seconde installation de renvoi (7, 16), fixes, et pendant une phase de formation de balles dans la chambre d'enroulement (3), elle parcourt un chemin de déplacement défini dans l'espace, sur des moyens de guidage (12), fixes et pour comprimer la balle à former une fois que celle-ci a atteint son diamètre maximum, elle exerce de l'extérieur vers l'intérieur une force de compression sur la balle,
**caractérisée en ce que**
l'installation de formation de balles (2) est déplacée à partir du chemin de mouvement défini dans l'espace au cours d'une première phase de formation de balle dans une phase de formation de balle suivante, à partir des moyens de guidage fixes (12), par la balle en cours de formation et passer sur des chemins de déplacement indépendants des moyens de guidage fixes (12), ces chemins étant définis par la croissance de la taille de la balle en cours de formation jusqu'à un diamètre maximum prédéfini de la balle,
le diamètre maximum présélectionné de la balle étant défini par des moyens de réglage mobiles (22, 26, 23), réalisés sous la forme d'un dispositif réglable de limitation pour limiter la longueur active de l'installation de formation de balles (2) et après avoir atteint de diamètre maximum réglé de la balle, la compression de la balle en cours de formation est induite de l'extérieur vers m'intérieur comme phase de compression de balle,
la plage des petits diamètres respectifs étant atteinte **en ce que** la phase de formation de balle ultérieure avec les autres chemins de déplacement de l'installation de formation de la balle ne s'établit même plus mais du fait de leur position sélectionnée, les moyens de réglage (22, 26, 23) assurent que la phase de compression fait directement suite à la fin de la première phase de formation de la balle.

2. Machine selon la revendication 1,
**caractérisée en ce que**
les moyens de réglage pour limiter le diamètre maximum de la balle sont réalisés avec des butées (22, 26) coopérant avec au moins un élément de limitation (23).

3. Machine selon la revendication 2,
**caractérisée en ce que**
l'élément de limitation (23) est prévu sur le carter de la machine.

4. Machine selon l'une des revendications 2 ou 3,
**caractérisée en ce que**
les moyens de réglage (22, 26) sont montés pivotants.

5. Machine selon l'une des revendications 1 à 4,
**caractérisée en ce que**
les moyens de guidage prévus entre la première et la seconde installation de renvoi (7, 16) comprennent des moyens de guidage fixes (12.1) de la paroi latérale du carter de la machine.

6. Machine selon l'une des revendications 1 à 5,
**caractérisée en ce que**
la chambre d'enroulement (3) est délimitée par des parties de paroi de carter (12.2) qui comportent les moyens de guidage de paroi latérale (12.1).

7. Machine selon les revendications 5 ou 6,
**caractérisée en ce que**
les parties de paroi latérale de boîtier (12.2) de la chambre d'enroulement (3) comportent un décrochement déployé vers l'intérieur comme moyen de guidage fixe de paroi latérale (12.1) pour le chemin de mouvement défini dans l'espace de l'installation de formation de balles (2).

8. Machine selon l'une des revendications 5 à 7,
**caractérisée en ce que**
les moyens de guidage fixe des parois latérales (12.1) comportent des rouleaux de renvoi (12) appuyés de manière fixe.

9. Machine selon l'une des revendications 1 à 8,
**caractérisée en ce que**
l'installation de formation de balles (2) comporte du côté de l'extrémité, des traverses (2.2) fixées à des moyens de traction (2.1).

10. Machine selon l'une des revendications 1 à 9,
**caractérisée en ce que**
la première et la seconde installation de renvoi (7, 16) sont réalisées sous la forme de cylindres de renvoi supérieur et inférieur, fixes, installés dans la chambre de formation de balles (3) et le cylindre de renvoi inférieur fixe (16) est situé directement après un élément de transfert (11) du dispositif de ramassage de produits (6).

11. Machine selon la revendication 10,
**caractérisée en ce que**
l'élément de transfert (11) est en amont du cylindre de renvoi inférieur (16) de façon que les produits transférés arrivent du dessus dans l'installation de formation de balles (2), en étant déviés en haut par le cylindre de renvoi inférieur (16).

12. Machine selon l'une des revendications 1 à 11,
**caractérisée en ce que**
l'installation de formation de balles (2) est guidée au cours d'une première phase contre les guides (12) et les moyens fixes de guidage de paroi latérale (12.1) de façon à réaliser une chambre de démarrage de formation de balles, polygonale mais voisine d'une forme circulaire.

13. Machine selon la revendication 12,
**caractérisée en ce que**
la chambre de démarrage de formation de balles a une section triangulaire, quadrangulaire ou pentagonale.

14. Machine selon l'une des revendications 1 à 13,
**caractérisée en ce que**
les guides (12) sont situés à l'extérieur de la paroi de boîtier (12.3) délimitant la chambre d'enroulement (3), latéralement au cours de la première phase de formation de la balle.

15. Machine selon l'une des revendications 1 à 14,
**caractérisée en ce que**
les traverses (2.2) de l'installation de formation de balles (2) s'étendent sur la largeur de la chambre de formation de balles au cours de la première phase de formation de la balle.

16. Machine selon l'une des revendications 1 à 15,
**caractérisée en ce que**
le lancement de la phase de compression de la balle active des éléments de mesure pour déterminer une caractéristique de la balle telle que par exemple la consistance de la balle.

17. Machine selon l'une des revendications 1 à 16,
**caractérisée par**
une pompe hydraulique (34) indépendante d'une sécurité de surcharge (25), et qui en cas de surcharge, est réalisée pour assurer le fonctionnement d'unité de la machine.

18. Machine selon l'une des revendications 1 à 16,
**caractérisée en ce que**
l'installation de formation de balles (2) est appuyée de manière souple par des cylindres de renvoi (18) sollicités par des accumulateurs de force.

19. Machine selon la revendication 18,
**caractérisée en ce que**
les accumulateurs de force sont des ressorts (13).
